# EUROPEAN PATENT APPLICATION

(11) **EP 1 002 828 A2**
(43) Date of publication of application: **24.05.2000**
(21) Application number: 99510001.3
(22) Date of filing: 19.11.1999
(51) Int. Cl.: C08J 7/04, C09D 5/32, C09D 7/12

(54) **Transparent construction sheet**

(30) Priority: 20.11.1998 ES 9802435
(71) Applicant: Petglass, S.L., 08021 Barcelona (Barcelona) (ES)
(72) Inventor: Malet, Michel Jean Georges, 08021 Barcelona (ES)
(74) Representative: Duran Moya, Carlos

(57) **Abstract**

The sheet comprises a base of polyethylene glycol polyterephthalate with a varnish applied uniformly to the whole of the face exposed to the ambient medium, for protection against ultraviolet radiation, consisting of a copolymer which contains a methyl acrylate or methacrylate and a copolymer of vinyl chloride and vinyl alcohol with a mixture of benzotriazole derivatives and piperazine derivatives, as well as an amount of between 2.5 and 5% of trimethylolpropane trihexamethylene triisocyanate to improve the anchorage of the layer of varnish on the base of polyethylene glycol polyterephthalate.

## Description

The present invention relates to a transparent construction sheet which has original and advantageous features which make it possible to obtain a long life, even when exposed to adverse weathering.

The transparent construction sheet of the present invention will be applicable to all those cases where a transparent sheet is required for the purpose of isolating an area of a building with respect to the outside, simultaneously permitting the passage of sunlight for the purpose of illumination. Among the more frequent cases of use are skylights, covering sheets for greenhouses and other similar applications.

At present, different types of covering sheets are used, those called organic glass, which replace conventional glass sheets.

However, a drawback of the organic glass sheets known at present lies in their sensitivity to the ultraviolet rays of sunlight, which significantly reduce their useful life.

Attempts to introduce protective products into the extrusion of the sheets known at present have met with the drawback that the resistance to heat of said products is much reduced, so that they are destroyed to a great extent at the extrusion temperature of the material.

In other cases products have been used which, by their nature, are in principle molecules which capture and destroy the free radicals. This is the case with diphenols such as hydroquinone and its derivatives. These products, while being effective, have the drawback of becoming coloured, giving rise to oxidation, causing the corresponding quinones and the materials protected by them to assume a dark coloration, becoming more intense all the time.

Also known is the use of molecules which have a ketone/enol tautomery, for example the hydroxylated derivatives of benzophenone. In this case the ultra-violet radiation generates a free radical on the oxygen atom of the ketone function, which induces the transference of the hydrogen atom of the phenol function to the cationic oxygen atom. The phenolic oxygen atom then has a free radical which allows it to take up again the proton ceded to the enol function which is thus transformed into a ketone function.

The ultraviolet energy is then absorbed and the energy dissipation occurs in the form of heat.

Fatigue of the reagents is therefore produced, for which reason these products are used above all for short-term protection, for example that required for cosmetic products.

Other products which use the tautometries of this type are constituted by the phenylhydroxybenzotriazoles. These molecules have a greater resistance to fatigue than the enols, although it is still insufficient.

The investigations carried out by the inventor have resulted in the discovery of transparent sheets, applicable to construction, which have a longer useful life without alteration of their features.

In essence, the sheet of the present invention consists of a sheet of ethylene glycol polyterephthalate (PET) which has applied to the face exposed to solar radiation a layer of protective varnish well adhered to the PET sheet and which is absorbent to the radiation of ultraviolet rays. The varnish will be provided with a product which facilitates its anchorage on the sheet of ethylene glycol polyterephthalate and will be applied by any known method, for example by spray gun.

The varnish will fulfil the basic function of capturing and destroying the free radicals, it being necessary to avoid those which take on colour by oxidation, such as hydroquinone and its derivatives, since they very rapidly lose transparency.

For the purpose of increasing the effectiveness of the filtration of the radiation by blocking the free radicals resulting from the photo-oxidation of the polymeric chains of the agglomerating means of the varnish, there will be introduced into the protection system amines having a high ester value which will react with oxygen, giving rise to hydroxyl radicals and then to aminoethers, which will combine with the peroxide radicals resulting from the chain breakages, giving alcohols and ketones and regenerating the initial amine.

In essence, the varnish will comprise a copolymer which contains a methyl acrylate or methacrylate and a copolymer of vinyl chloride and vinyl alcohol dissolved in a ketone or ester solvent mixed with a halogenated solvent, being able to contain tetrahydrofuran, comprising as protective agent a mixture of benzotriazole derivatives and piperazine derivatives. Also, the varnish will contain in its formulation an amount of between 2.5 and 5% of trimethylolpropane trihexamethylene triisocyanate for the purpose of obtaining improved anchorage between the varnish and the polyester base.

Some exemplary embodiments of the coating varnish for a sheet of ethylene glycol polyterephthalate will be indicated in the following.

### Example 1

| | |
|---|---|
| Methyl polymethacrylate | 30 to 45% |
| Hydroxy-2-benzophenone | 2.5 to 6% |
| Solvent | 67.5 |

### Example 2

| | |
|---|---|
| Copolymer of hydroxylated vinyl chloride | 30 to 45% |
| Hydroxy-2-benzophenone | 2.5 to 6% |
| Solvent | 67.5 |

### Example 3

| | |
|---|---|
| Copolymer of hydroxylated vinyl chloride | 30 to 45% |
| Methyl polyacrylate | 30 to 45% |
| N-phenylbenzotriazole | 2.5 to 6% |
| Solvent | 67.5 |

### Example 4

| | |
|---|---|
| Copolymer of hydroxylated vinyl chloride | 30 to 45% |
| Methyl polyacrylate | 30 to 45% |
| N-tolylbenzotriazole | 2.5 to 6% |
| Solvent | 67.5 |

### Example 5

| | |
|---|---|
| Copolymer of hydroxylated vinyl chloride | 30 to 45% |
| Methyl polyacrylate | 30 to 45% |
| N-tolylbenzotriazole | 2.5 to 6% |
| Solvent | 67.5 |

### Example 6

| | |
|---|---|
| Copolymer of hydroxylated vinyl chloride | 30 to 45% |
| Methyl polyacrylate | 30 to 45% |
| N-tolylbenzotriazole | 1.25 to 6% |
| N-methoxypiperazine | 1.25 to 6% |
| Solvent | 67.5 |

### Example 7

| | |
|---|---|
| Copolymer of hydroxylated vinyl chloride | 30 to 45% |
| Methyl polyacrylate | 30 to 45% |
| N-tolylbenzotriazole | 1.25 to 6% |
| N-oxyoctanopiperazine | 1.25 to 6% |
| Solvent | 67.5 |

In all cases there will be added the amount mentioned of between 2.5 and 5% of trimethylolpropane trihexamethylene triisocyanate.

For the comparison of the various formulations, samples produced by using the varnishes of the different examples applied to a sheet of PET were subjected to the action of an ultraviolet lamp having an arc of 40 mm and power of 500 watts, which corresponds to a high pressure mercury lamp, placing the PET laminar element between the aforesaid lamp and a detector of the actinometer formed by this assembly of elements, the test being carried out by measuring the time, expressed in seconds, taken for the detector to receive a constant amount of energy.

The results are shown in the following Table 1, in which as the example number there are shown the varnishes corresponding to the different compositions of examples 1 to 8, compared with a case of a PET sheet without varnish, showing the corresponding times for each case, in which it will be observed that in the case of application of the varnishes of the invention the improvement measured in the time factor varies between 7 arid 10 times that corresponding to a sheet without varnish.

**Table 1**

| Example N° | Without varnish | 1 | 2 | 3 | 4 | 5 | 6 | 7 | 8 |
|---|---|---|---|---|---|---|---|---|---|
| time(s) | 40 | 280 | 285 | 278 | 320 | 315 | 318 | 392 | 395 |

As indicated previously, the varnish will be applied in the form of a uniform layer to the whole of the face, directed towards the outside, of a base sheet of polyethylene glycol polyterephthalate (PET) in different thicknesses, partially conditioned by the possibility of application thereof and by the economic factors of said application, although, within wide limits, the effectiveness of the coating varnish will increase with the thickness of the layer of varnish.

## Claims

1. Transparent construction sheet, characterized in that it comprises a base of polyethylene glycol polyterephthalate with a varnish applied uniformly to the whole of the face exposed to the ambient medium, for protection against ultraviolet radiation.

2. Transparent construction sheet, according to claim 1, characterized in that the varnish consists of a copolymer which contains a methyl acrylate or methacrylate and a copolymer of vinyl chloride and vinyl alcohol with a mixture of benzotriazole derivatives and piperazine derivatives.

3. Transparent construction sheet, according to claim 2, characterized in that the varnish assumes a dissolved form in a ketone or ester solvent mixed with a halogenated solvent.

4. Transparent construction sheet, according to the preceding claims, characterized in that the solvent phase may contain tetrahydrofuran.

5. Transparent construction sheet, according to the preceding claims, characterized in that the varnish contains in its formulation an amount of between 2.5 and 5% of trimethylolpropane trihexamethylene triisocyanate to improve the anchorage of the layer of varnish on the base of polyethylene glycol polyterephthalate.
